# EUROPEAN PATENT APPLICATION

(11) **EP 4 497 635 A1**
(43) Date of publication of application: **29.01.2025**
(21) Application number: 22939006.7
(22) Date of filing: 27.04.2022
(51) Int. Cl.: B60R 1/00, B60R 13/00

(54) **SENSOR CABIN, DRIVING APPARATUS AND INSTALLATION METHOD FOR SENSOR CABIN**

(71) Applicant: Shenzhen Yinwang Intelligent Technologies Co., Ltd., Shenzhen, Guangdong 518129 (CN)
(72) Inventor: XIAO, Xisheng, Shenzhen, Guangdong 518129 (CN); LI, Shuaijun, Shenzhen, Guangdong 518129 (CN); LIU, Jun, Shenzhen, Guangdong 518129 (CN); XU, Jing, Shenzhen, Guangdong 518129 (CN); CHEN, Wei, Shenzhen, Guangdong 518129 (CN); ZHANG, Haoliang, Shenzhen, Guangdong 518129 (CN)
(74) Representative: Maiwald GmbH
(86) International application number: PCT/CN2022/089609
(87) International publication number: WO 2023/206153

(57) **Abstract**

A sensor compartment (06), a driving device (100) having the sensor compartment (06), and a sensor compartment (06) installation method relate to the field of driver assistance system technologies. A sensor compartment (06) is mainly provided. An installation manner of an optical sensor (03) in the sensor compartment (06) can improve detection performance of the optical sensor (03). The sensor compartment (06) includes a compartment housing (1), the compartment housing (1) is of a sealed structure, the compartment housing (1) has at least one window, and the window is a light-transmitting compartment window (2). In addition, the compartment housing (1) is configured to place at least one optical sensor (03), and light outside the compartment housing (1) can be received by the optical sensor (03) through the compartment window (2). The compartment window (2) is used as field of view glass, and the compartment housing (1) is used as a support structure for bearing the compartment window (2) and the optical sensor (03). This can improve detection performance, and does not increase installation process difficulty of the sensor compartment (06).

## Description

### TECHNICAL FIELD

This application relates to the field of driver assistance system technologies, and in particular, to a sensor compartment that can be used in a driver assistance system, a driving device having a sensor compartment, and a sensor compartment installation method.

### BACKGROUND

An advanced driver assistance system (advanced driving assistance system, ADAS) uses various optical sensors (such as a lidar and a monocular camera or a binocular camera) installed on an automobile to sense a surrounding environment, collect data, identifies, detects, and tracks static and dynamic objects, and performs systematic operation and analysis based on navigation map data at any time in a traveling process of the automobile. In this way, a driver can be aware of a possible danger in advance. This effectively improves automobile driving comfort and safety.

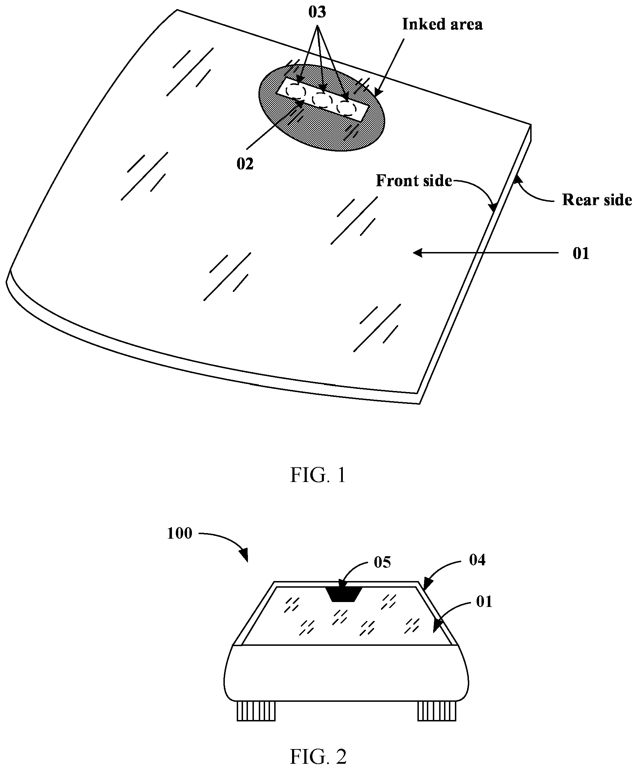

FIG. 1 shows an installation manner of an optical sensor in an advanced driver assistance system ADAS. In this installation manner, an inked area is formed on a front windshield 01, and an optical sensor 03 is disposed on a rear side of the inked area. To enable the optical sensor 03 to sense light outside a driver's cab, as shown in FIG. 1, a position that is in the inked area and that is opposite to the optical sensor 03 is a light-transmitting area 02 that is not inked. Further, the optical sensor 03 may sense an environment around the driver's cab through the light-transmitting area 02.

In a structure shown in FIG. 1, the light-transmitting area 02 and the other area of the front windshield 01 are of an integrated glass structure. In this case, the light-transmitting area 02 used as a viewing window of the optical sensor 03 reduces detection performance of the optical sensor 03 (for example, distortion and ghosting occur, and light transmittance is reduced).

### SUMMARY

This application provides a sensor compartment, a driving device having the sensor compartment, and a sensor compartment installation method. A main objective is to provide a sensor compartment. An installation manner of an optical sensor involved in the sensor compartment can improve detection performance of the optical sensor.

To achieve the foregoing objective, the following technical solutions are used in embodiments of this application.

According to one aspect, this application provides a sensor compartment. The sensor compartment is configured to be installed on a windshield of a driver's cab, for example, a front windshield. An embedding groove may be provided on the top of the windshield, and the sensor compartment is configured to be installed in the embedding groove.

The sensor compartment includes a compartment housing, where the compartment housing is of a sealed structure, the compartment housing has at least one window, and the window is a light-transmitting compartment window. In addition, the compartment housing is configured to place at least one optical sensor, and light outside the compartment housing can be received by the optical sensor through the compartment window.

In the sensor compartment provided in this application, because a light-transmitting compartment window is formed on the compartment housing, light emitted or received by the optical sensor may pass through the compartment window, and the compartment housing is used as a support structure for bearing a field of view window. Further, in some implementations, when a material of the compartment window is selected, glass with high optical performance may be selected as the compartment window, to improve light detection performance of the optical sensor.

When a material of the compartment housing is selected, more materials can be selected than the material of the compartment window. For example, when glass with an excellent optical property is selected for the compartment window, glass of any light-transmitting material and even plastic can be selected for the compartment housing. In addition, a shape of the compartment housing is not limited by a field of view of the optical sensor, and the shape of the compartment housing that can be selected is also diversified. In this way, when the compartment housing is embedded in the windshield, that is, when the compartment housing is assembled with the windshield, a requirement on an assembly process of the compartment housing is low.

Therefore, the sensor compartment provided in this application is used as a bearing member of the optical sensor. This improves detection performance of the optical sensor, and does not increase assembly process difficulty.

In a possible implementation, a viewing window of the optical sensor faces the compartment window.

In other words, in some scenarios, the optical sensor may be installed in the compartment housing, so that light is sensed by the optical sensor through the light-transmitting compartment window.

In a possible implementation, the viewing window of the optical sensor is embedded in the compartment window.

For example, when strength of the viewing window material of the optical sensor is high, the optical sensor may be directly embedded in the compartment housing, to expose the viewing window of the optical sensor. In this way, even if the viewing window of the optical sensor is exposed, because the viewing window has high strength, use performance of the optical sensor can also be ensured. In addition, if the viewing window of the optical sensor is directly exposed, detection performance of the optical sensor can be further improved.

In a possible implementation, the at least one optical sensor includes a first optical sensor and a second optical sensor, where the first optical sensor includes a visible light camera and/or an infrared camera, and the second optical sensor includes a lidar.

In other words, different types of optical sensors may be all integrated into the compartment housing of the sensor compartment, so that high integration of different optical sensors can be implemented. For example, compared with a related technology in which some optical sensors are disposed on the top of a driver's cab, in this application, an installation structure configured to install the optical sensor on the top of the driver's cab is omitted. From a perspective of an installation process, a technological process can be simplified. From a perspective of appearance aesthetics, because the optical sensor located on the top of the driver's cab is disposed in the sensor compartment, appearance aesthetics can be improved.

In addition, when a controller is electrically connected to each optical sensor, because different types of optical sensors are integrated together, cabling arrangement can be further simplified.

In a possible implementation, an isolation plate is disposed in the compartment housing, and the isolation plate divides space in the compartment housing into a first chamber and a second chamber. The first optical sensor is disposed in the first chamber, and the second optical sensor is disposed in the second chamber.

In this way, operating environments of the first optical sensor and the second optical sensor may be independent of each other, to avoid performance impact between optical sensors having different operating principles.

In a possible implementation, the sensor compartment further includes at least one of a compartment window cleaning apparatus, a compartment window heating apparatus, a compartment housing dehumidification apparatus, and a compartment housing heat dissipation apparatus.

When the optical sensor operates, there is also a requirement on an operating environment. For example, cleanliness of the compartment window used for light transmission needs to be ensured. In this way, light transmission of the compartment window can be ensured, and light detection performance of the optical sensor can be improved. For another example, fogging and frosting of the compartment window are avoided. Therefore, some environment assistance systems that can process an environment in which the optical sensor is located may be disposed, to improve detection accuracy of the optical sensor.

In a possible implementation, the compartment window heating apparatus includes a heating wire. The heating wire is arranged along an edge of the compartment window.

That is, the heating wire can be used to heat the compartment window to prevent the compartment window from fogging and frosting.

In a possible implementation, the compartment window heating apparatus includes a heat gun. The heat gun is disposed in the compartment housing.

That is, hot air is generated by the heat gun, and the hot air may flow with airflow to heat the compartment window.

In a possible implementation, the compartment window cleaning apparatus includes a wiper and a drive structure. The drive structure is connected to the wiper. The drive structure can drive the wiper to move between a first position and a second position, when the wiper is in the first position, the wiper is located in the compartment housing, and when the wiper is in the second position, the wiper is located outside the compartment window, to clean the compartment window.

In this implementation, a surface of the compartment window is cleaned by using the wiper. In addition, when the wiper does not operate, the wiper may be hidden in the compartment housing. When the wiper is needed to clean an outer surface of the compartment window, the drive structure may drive the wiper to move to the outside of the compartment window, to clean a stain on the outer surface of the compartment window by using the wiper.

In a possible implementation, a third chamber is formed in the compartment housing. When the wiper is in the first position, the wiper is located in the third chamber, and the third chamber is separated from a chamber in which the optical sensor is disposed in the compartment housing.

It may also be understood in this way that when the wiper does not operate, the wiper is disposed in the third chamber. In addition, because the third chamber configured to accommodate the wiper is a chamber separated from the chamber accommodating the optical sensor, water carried by the wiper can be prevented from affecting detection performance of the optical sensor.

In a possible implementation, the drive structure configured to drive the wiper to move between the first position and the second position may include a telescopic unit, where the telescopic unit may drive the wiper to move in a straight line, to move from the first position to the outside of the third chamber. In addition, the drive structure may further include a swing sweeper unit. After the wiper moves to the outside of the compartment housing, the swing sweeper unit may drive the wiper to rotate and swing on the outer surface of the compartment window.

In a possible implementation, the compartment housing dehumidification apparatus includes a first fan and a water-absorbing structure, where one end of an air duct of the first fan communicates with the inside of the compartment housing, and the other end of the air duct of the first fan communicates with the outside of the compartment housing; and the water-absorbing structure is disposed in the air duct of the first fan.

In other words, the first fan may be used to discharge damp air in the compartment housing to the outside of the compartment housing. In addition, because the water-absorbing structure is disposed in the air duct of the first fan, when the damp air passes through the air duct, moisture in the gas may be absorbed by the water-absorbing structure, to perform dehumidification.

In a possible implementation, the water-absorbing structure may be a water-absorbing layer structure obtained by using a water-absorbing material. In addition, a multi-layer water-absorbing layer structure may be disposed, and the multi-layer water-absorbing layer structure may be arranged in an extension direction of the air duct.

In a possible implementation, the compartment housing heat dissipation apparatus includes a second fan and a heat conduction structure, where one end of an air duct of the second fan communicates with the inside of the compartment housing, and the other end of the air duct of the second fan communicates with the outside of the compartment housing; and one part of the heat conduction structure is disposed close to the optical sensor, and another part of the heat conduction structure is close to the air duct of the fan.

The second fan herein may discharge hot air in the compartment housing to the outside of the compartment housing, heat diffused by the optical sensor is conducted to the air duct of the fan by using the heat conduction structure, and heat dissipation is performed on the optical sensor by using a flow channel of the airflow in the air duct. This improves use performance of the optical sensor.

The first fan and the second fan may be one fan, or may be two fans independent of each other.

In a possible implementation, the compartment housing is made of an opaque material.

For example, the compartment housing may be made of plastic, or another opaque material. In this way, the position of the formed sensor compartment may be similar to the existing inked area, and may perform sun-shading, heat insulation, and beautification, to prevent some structural members or electronic components in the sensor compartment from being seen from the outside of the driver's cab.

In a possible implementation, a surface that is of the compartment housing and that is configured to be opposite to the top of the driver's cab protrudes toward the outside of the compartment housing.

In this way, space in the compartment housing for accommodating the optical sensor can be expanded.

In a possible implementation, a surface that is of the compartment housing and that faces the outside of the driver's cab is a curved surface protruding toward the outside of the compartment housing.

In such a design, space in the compartment housing for accommodating the optical sensor can also be expanded.

According to another aspect, this application further provides a driving device, including a windshield. In addition, the driving device further includes the sensor compartment in any one of implementations of the first aspect, and at least one optical sensor. The compartment housing of the sensor compartment is embedded in the windshield, and the at least one optical sensor is placed in the compartment housing.

The driving device provided in this application includes the sensor compartment in any one of implementations of the first aspect, and the compartment window is used as field of view glass of the optical sensor. During specific implementation, a compartment window with excellent optical performance may be selected as the field of view glass, to improve detection performance of the optical sensor.

In addition, the compartment housing is different from the compartment window in that diversified materials may be selected, a shape is not affected by the detection performance of the optical sensor, and different shapes may be selected. Therefore, when the compartment housing is assembled with the windshield, assembly process difficulty is not increased.

In a possible implementation, the windshield herein may be a front windshield or a rear windshield.

In a possible implementation, an embedding groove is provided at a position that is on the windshield and that is close to the top of a driver's cab, and the compartment housing is installed in the embedding groove and is connected to the windshield in a sealed manner.

In other words, the embedding groove may be provided at a top position of the windshield, to embed the sensor compartment in the embedding groove.

In a possible implementation, the driving device further includes a rear view mirror disposed in the driver's cab, and the rear view mirror is installed on a part that is of the compartment housing and that is located in the driver's cab.

It may be understood that the rear view mirror can be directly installed on the compartment housing.

In a possible implementation, a concave chamber may be disposed on the part that is of the compartment housing and that is located in the driver's cab, the rear view mirror is installed in the concave chamber; or the rear view mirror may be installed on the compartment housing by using a bracket.

According to still another aspect, this application further provides a sensor compartment installation method. A sensor compartment includes a compartment housing, the compartment housing is sealed, at least one window is provided on the compartment housing, the window is a light-transmitting compartment window, the compartment housing is configured to place at least one optical sensor, and light outside the compartment housing can be received by the optical sensor through the compartment window.

The installation method includes:
installing the compartment housing of the sensor compartment in an embedding groove on a windshield; and
connecting the compartment housing to the windshield in a sealed manner.

It can be learned from the foregoing sensor compartment installation method provided in this application that when the sensor compartment is installed, the compartment housing and the windshield are assembled. The compartment housing is not used as the field of view glass of the optical sensor, but as a bearing support body of the optical sensor. For selection of a material and a shape of the compartment housing, compared with selection of a material and a shape of the field of view glass, there are no many limitations. Further, when the sensor compartment is installed, a requirement on an assembly process between the compartment housing and the windshield is low. In addition, a compartment window with excellent optical performance may be selected as the field of view glass, to improve detection performance of the optical sensor.

In a possible implementation, before the installing the compartment housing of the sensor compartment in an embedding groove on a windshield, the method further includes cleaning a position that is on the embedding groove and that is in contact with the compartment housing.

In this way, sealing of a connection between the compartment housing and the windshield can be improved.

### BRIEF DESCRIPTION OF DRAWINGS

FIG. 1 is a diagram of a structure reflecting an installation manner of an optical sensor in a conventional technology;
FIG. 2 is a diagram of a structure of a driving device according to an embodiment of this application;
FIG. 3 is a diagram of a structure of a driving device according to an embodiment of this application;
FIG. 4 is a diagram of a structure of a driving device on which a sensor compartment is installed according to an embodiment of this application;
FIG. 5 is a diagram of a structure of FIG. 4 from another perspective;
FIG. 6a is a diagram of a structure of a front windshield having an embedding groove according to an embodiment of this application;
FIG. 6b is a diagram of a structure of another front windshield having an embedding groove according to an embodiment of this application;
FIG. 7 is a diagram of a structure of a sensor compartment according to an embodiment of this application;
FIG. 8 is a diagram of a structure reflecting a position relationship between an optical sensor and a sensor compartment according to an embodiment of this application;
FIG. 9 is a diagram of another structure reflecting a position relationship between an optical sensor and a sensor compartment according to an embodiment of this application;
FIG. 10 is a diagram of a structure reflecting a compartment housing and a compartment window in a sensor compartment according to an embodiment of this application;
FIG. 11 is a diagram of a structure of a front windshield having an embedding groove according to an embodiment of this application;
FIG. 12 is a diagram of a structure reflecting a compartment housing and a compartment window in a sensor compartment according to an embodiment of this application;
FIG. 13 is a diagram of a structure of a front windshield having an embedding groove according to an embodiment of this application;
FIG. 14 is a diagram of a structure reflecting a sensor compartment having a plurality of receptacles according to an embodiment of this application;
FIG. 15 is a diagram of a structure of a sensor compartment reflecting a wiper according to an embodiment of this application;
FIG. 16 is a diagram of a structure of a sensor compartment reflecting a nozzle according to an embodiment of this application;
FIG. 17 is a diagram of a structure of a sensor compartment reflecting a heating wire according to an embodiment of this application;
FIG. 18 is a diagram of a structure of a front windshield reflecting a heating wire according to an embodiment of this application;
FIG. 19 is a diagram of a structure of a sensor compartment reflecting a heat gun according to an embodiment of this application;
FIG. 20 is a diagram of a structure of a sensor compartment reflecting a dehumidification apparatus according to an embodiment of this application;
FIG. 21 is a diagram of a structure of a sensor compartment reflecting a heat dissipation apparatus according to an embodiment of this application;
FIG. 22 is a diagram of a structure reflecting a position relationship between a rear view mirror and a sensor compartment according to an embodiment of this application;
FIG. 23 is a diagram of another structure reflecting a position relationship between a rear view mirror and a sensor compartment according to an embodiment of this application;
FIG. 24 is a diagram of still another structure reflecting a position relationship between a rear view mirror and a sensor compartment according to an embodiment of this application;
FIG. 25 is a diagram of a structure reflecting protrusion of a sensor compartment according to an embodiment of this application;
FIG. 26 is a diagram of a structure of a connection relationship between a sensor compartment and a driver's cab according to an embodiment of this application; and
FIG. 27 is a diagram of a structure of another connection relationship between a sensor compartment and a driver's cab according to an embodiment of this application.

### Reference numerals:

100: driving device;
01: front windshield; 011: embedding groove;
02: light-transmitting area;
03: optical sensor;
04: driver's cab;
05: inked area;
06: sensor compartment;
07: rear view mirror; 071: bracket;
1: compartment housing; 101: receptacle; 101a: first receptacle; 101b: second receptacle; 101c: third receptacle;
2: compartment window;
3: sealing adhesive layer;
4: optical sensor; 41: first optical sensor; 42: second optical sensor;
5: isolation plate;
6: wiper;
7: nozzle;
8: heating wire;
9: heat gun;
10: first fan; 10a: air duct;
11: water-absorbing structure;
12: optical sensor bracket;
13: second fan; 13a: air duct;
14: heat conduction structure;
15: installation bracket.

### DESCRIPTION OF EMBODIMENTS

Before embodiments of this application are described, technical terms related to embodiments of this application are first described. For details, refer to the following descriptions.

Inked area: FIG. 2 is a diagram of a structure viewed from the front of a driving device 100. A front windshield 01 is installed on a front side of a driver's cab 04, an inked area 05 is formed on the top of the front windshield 01, and the inked area 05 may perform sun-shading and heat insulation. In addition, because a rear view mirror is usually installed on an inner side of the front windshield 01 (that is, located in the driver's cab), the inked area 05 may also cover the rear view mirror, to improve appearance aesthetics of the driver's cab. In addition, the inked area 05 also has another function.

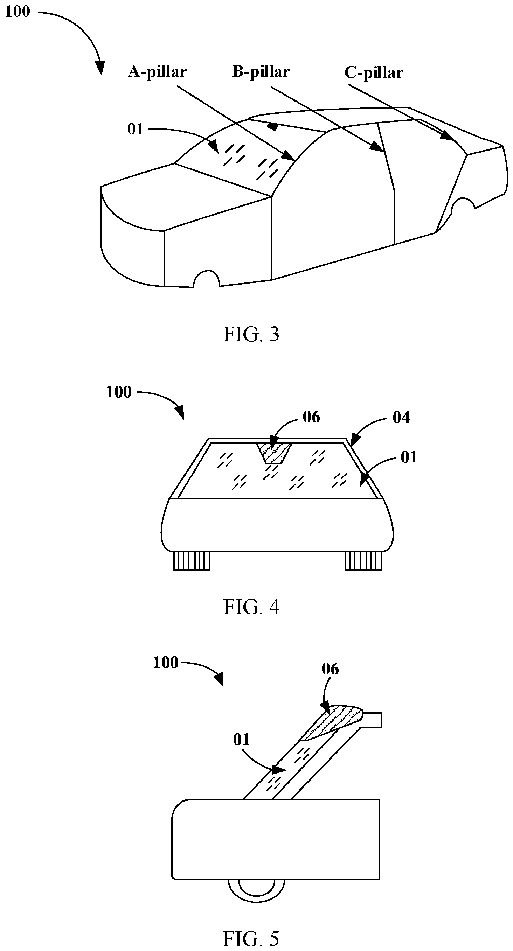

A-pillar, B-pillar, and C-pillar of an automobile: As shown in FIG. 3, in the driving device 100, for example, there are three pillars on two sides of glass of a front door and a rear door of the automobile, and the pillars are sequentially a front pillar (the A-pillar), a middle pillar (the B-pillar), and a rear pillar (the C-pillar) from front to back. The A-pillar, the B-pillar, and the C-pillar mainly play a supporting role. The front windshield 01 is installed on the A-pillar, and a rear windshield is installed on the C-pillar.

Viewing window of an optical sensor: A lens that is of the optical sensor and is closest to an object side and that is exposed outside the entire optical sensor and is configured to sense light is the viewing window of the optical sensor.

The following describes embodiments of this application with reference to accompanying drawings in embodiments of this application.

An embodiment of this application relates to a driving device. For example, the driving device may be an automobile shown in FIG. 4, and the automobile may be a manned automobile, or may be an unmanned automobile. For another example, the driving device may be a train, an automobile, or the like. The accompanying drawings used below are described by using an automobile as an example.

In different driving devices described above, an advanced driver assistance system (advanced driving assistance system, ADAS) is disposed, that is, driving safety is improved by using the ADAS. The ADAS mainly includes various optical sensors, for example, a visible light camera, an infrared camera, and a lidar. To be specific, the optical sensors sense an environment around the driving device, to predict the environment around the driving device. Further, there are high requirements on use performance of these optical sensors, for example, eliminating distortion, eliminating ghosting, and improving light transmittance.

In addition, these optical sensors are usually disposed close to a windshield, for example, disposed close to the front windshield 01. Therefore, during specific installation of the optical sensor, limitations on some installation processes and optical properties of the front windshield affect use performance of the optical sensor. For example, light transmittance of the front windshield becomes a constraint factor for improving detection performance of the optical sensor.

This application provides a sensor compartment that can be used in a driving device. In comparison with an existing means, the sensor compartment changes an installation manner of an optical sensor in the driving device. Use of the installation manner of the optical sensor provided in this application can improve detection performance of the optical sensor, and does not increase assembly process difficulty on the windshield. For a specific implementable structure of the sensor compartment, refer to the following descriptions.

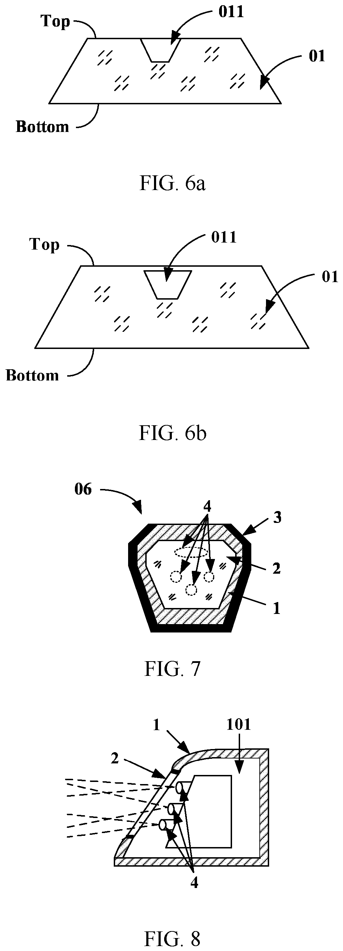

FIG. 4 is a diagram of a structure of a driving device 100 including a sensor compartment 06 in this application. The diagram of the structure is a front view of the driving device 100. FIG. 5 is a diagram of a part of the structure of the driving device 100 including the sensor compartment 06 in this application. The diagram of the structure is a side view of the driving device 100. FIG. 6a and FIG. 6b are diagrams of a structure of a front windshield 01 in FIG. 4 and FIG. 5.

It should be explained that in the following descriptions, an example in which the sensor compartment 06 is installed on the front windshield 01 is used for description. Certainly, in some other driving devices, the sensor compartment 06 in this application may alternatively be installed on a rear windshield.

As shown in FIG. 6a and FIG. 6b, an embedding groove 011 may be provided at a position on the top of the front windshield 01, and the sensor compartment 06 shown in FIG. 4 and FIG. 5 is installed in the embedding groove 011. The top of the front windshield 01 means a position that is on the front windshield 01 and that is close to the top of a driver's cab.

In some implementable installation manners, as shown in FIG. 6a, the embedding groove 011 penetrates to the top edge of the front windshield 01. In another installation manner, as shown in FIG. 6b, the embedding groove 011 does not penetrate to the top edge of the front windshield 01, but has a spacing from the top edge. For example, the spacing may range from 2 cm to 10 cm, that is, a hole is formed on the front windshield 01, and the hole is configured to install the sensor compartment 06.

FIG. 7 shows an implementable structure of the sensor compartment 06 according to this application, and FIG. 7 shows an optical sensor 4. The sensor compartment 06 includes a compartment housing 1, and the compartment housing 1 may be embedded in the embedding groove 011 shown in FIG. 6a and FIG. 6b. To ensure sealing of assembly between the compartment housing 1 and the front windshield 01, a sealing structure may be formed at a contact position between the compartment housing 1 and the front windshield 01. For example, a sealing adhesive layer 3 may be formed along the outer edge of the compartment housing 1, that is, the compartment housing 1 is connected to the front windshield 01 by using the sealing adhesive layer 3 in a sealed manner.

Because the sensor compartment 06 shown in FIG. 7 is installed in the embedding groove 011 of the structure shown in FIG. 6a, no sealing adhesive layer 3 is disposed at a position that is on the compartment housing 1 and that is close to the vehicle top of the driver's cab. Certainly, in some implementation structures, the sealing adhesive layer 3 may alternatively be disposed at the position that is on the compartment housing 1 and that is close to the vehicle top of the driver's cab, to further improve sealing of the entire driver's cab.

Still as shown in FIG. 7, at least one window is provided on a surface that is of the compartment housing 1 and that faces the outside of the driver's cab, and the window is a light-transmitting compartment window 2. For example, FIG. 7 shows an example in which there is a light-transmitting compartment window 2 on the compartment housing 1.

In addition, at least one optical sensor 4 may be disposed in the compartment housing 1 of the sensor compartment 06. As shown in FIG. 7, four optical sensors 4 are included. The compartment window 2 is used as a field of view window of the optical sensor 4, and light emitted or received by the optical sensor 4 may pass through the compartment window 2, to detect a situation outside the driver's cab.

A manner of disposing the optical sensor 4 in the compartment housing 1 may include a plurality of cases. The following provides two installation manners with reference to the accompanying drawings.

For example, FIG. 8 shows an arrangement manner of the optical sensor 4. Specifically, a receptacle 101 is formed in the compartment housing 1, the optical sensor 4 is disposed in the receptacle 101, and a viewing window of the optical sensor 4 faces the compartment window 2. In this way, light outside the compartment housing 1 may be received by the optical sensor 4 located in the compartment housing 1 through the light-transmitting compartment window 2, or light emitted by the optical sensor 4 may pass through the compartment window 2.

Glass with low roughness and high light transmission may be selected for the compartment window 2 in FIG. 8, or an antireflection film may be formed on the compartment window 2, to avoid ghosting. This further improves a signal-to-noise ratio, and improves detection performance of the optical sensor 4.

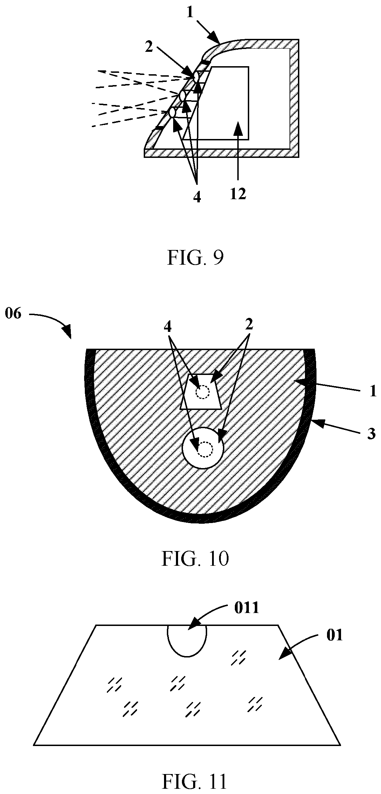

For another example, FIG. 9 shows another arrangement manner of the optical sensor 4. The viewing window of the optical sensor 4 is directly embedded in the compartment window 2, that is, the viewing window of the optical sensor 4 is used as the compartment window and is directly exposed outside the driver's cab.

In some implementations, when the viewing window of the optical sensor 4 has high strength and is unlikely to be damaged in impact of an external environment, the installation manner of the optical sensor 4 shown in FIG. 9 can be used.

When the optical sensor 4 is installed in the manner shown in FIG. 9, because the viewing window of the optical sensor 4 is directly exposed outside the driving device, the optical sensor 4 can directly sense external light, to fully reflect detection performance of the optical sensor.

Based on the foregoing descriptions of the structure of the sensor compartment 06 in this application, it can be learned that whether the structure in FIG. 8 or the structure in FIG. 9 is used, the compartment window 2 disposed on the compartment housing 1 is used as field of view glass of the optical sensor 4. In this way, from a design perspective, the field of view glass with an excellent optical property may be selected as the compartment window, to improve detection performance of the optical sensor 4.

The compartment housing 1 configured to bear the optical sensor 4 needs to be assembled with the front windshield 01. That is, the compartment housing 1 serves as a support structure of the optical sensor 4 and a structure connected to the front windshield 01, and is not used as a field of view structure of the optical sensor 4. In this way, the compartment housing 1 is different from the compartment window 2 used as the field of view glass in that diversified materials may be selected. For example, light-transmitting glass or opaque plastic may be selected, and for the light-transmitting glass or the opaque plastic, composition may not be limited. In this way, compared with assembling the front windshield 01 and the compartment window that has a material limitation, assembling the front windshield 01 and the compartment housing 1 has low process difficulty. This does not increase process difficulty in assembling the sensor compartment 06 on the windshield.

In addition, in an installation process, the compartment housing 1 and the front windshield 01 are assembled, and diversified materials may be selected for the compartment housing 1. For example, plastic obtained by using an injection molding process may be used. When the injection molding process is used, it can be easily implemented that a curvature radius of the compartment housing 1 is close to a curvature radius of the front windshield 01, so that for a manufacturing process, process difficulty can be reduced, and production costs can be reduced.

Therefore, the sensor compartment 06 provided in this application can improve detection performance of the optical sensor 4, and does not increase assembly process difficulty.

It is described in the foregoing that the compartment housing 1 may be made of an opaque material. In this way, the opaque compartment housing 1 may perform sun-shading and heat insulation, to avoid a high temperature in the compartment housing 1. This avoids that the high temperature affects the detection performance of the optical sensor 4.

When the optical sensor 4 is disposed in the compartment housing 1 as shown in FIG. 8, a shape of the compartment window 2 may be designed based on a field of view of the optical sensor 4. For example, FIG. 10 shows two structures of the compartment window 2 in different shapes. One is a polygonal structure, and the other is a circular structure. Certainly, FIG. 10 is merely an example for description. A structure of the compartment window 2 may include the structure shown in FIG. 10, but is not limited thereto.

When the viewing window of the optical sensor 4 is exposed outside the compartment housing 1 as shown in FIG. 9, a window may be provided on the compartment housing 1 based on an appearance structure of the viewing window of the optical sensor, to seal and assemble the viewing window of the optical sensor 4 to the window.

In addition, an appearance structure of the compartment housing 1 is not limited in this application either. The following provides examples of several compartment housings 1 in different shapes.

For example, FIG. 7 shows that an appearance of the compartment housing 1 is of a polygonal structure. Adaptively, the embedding groove 011 provided on the front windshield 01 is a polygonal groove shown in FIG. 6a and FIG. 6b.

For another example, FIG. 10 shows that an appearance of the compartment housing 1 is of a sector structure. Adaptively, the embedding groove 011 provided on the front windshield 01 is a sector groove shown in FIG. 11.

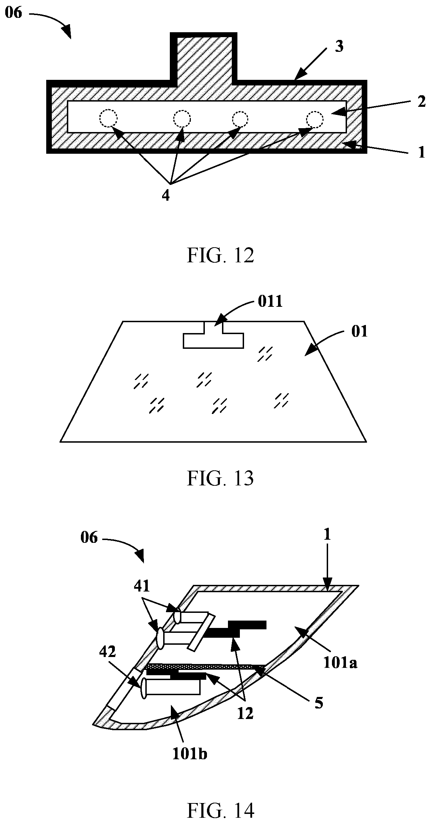

For still another example, FIG. 12 shows that an appearance of the compartment housing 1 is of a T-shaped structure. Adaptively, the embedding groove 011 provided on the front windshield 01 is a T-shaped groove shown in FIG. 13.

In this application, there may be at least one optical sensor 4 installed in the sensor compartment 06. For example, only a visible light camera or an infrared camera may be included. Alternatively, a plurality of cameras may be included. For example, a visible light camera and an infrared camera may be included, a visible light camera, an infrared camera, and a lidar may be included, or an infrared camera and a lidar may be included. Certainly, another type of imaging sensor may also be included.

In other words, the compartment housing 1 may be used as a support structure, and a plurality of optical sensors implementing different functions are all integrated into the compartment housing 1. This, compared with disposing some optical sensors on the vehicle top of the driver's cab and disposing some optical sensors in the driver's cab, can improve integration of the optical sensors, so that the optical sensors are modularized and integrated together.

It is described in the foregoing that there may be a plurality of optical sensors 4 in this application. For example, a structure shown in FIG. 14 shows three optical sensors, including two first optical sensors 41 and one second optical sensor 42. The first optical sensor 41 may be an imaging sensor, for example, at least one of a visible light camera and an infrared camera, and the second optical sensor 42 may be a lidar.

To avoid mutual interference between these optical sensors, as shown in FIG. 14, an isolation plate 5 is disposed in a receptacle of the compartment housing 1, to divide the receptacle into a first receptacle 101a and a second receptacle 101b. The first optical sensor 41 is disposed in the first receptacle 101a, and the second optical sensor 42 is disposed in the second receptacle 101b.

In other words, when a plurality of optical sensors having different operating principles are included, the receptacle in the compartment housing 1 may be divided into a plurality of mutually independent accommodation areas, so that the optical sensors having different operating principles are disposed in different areas. This improves use performance of any optical sensor.

In addition, to improve installation stability of any optical sensor 4 in the compartment housing 1, as shown in FIG. 14, the optical sensor 4 may be installed in the compartment housing 1 by using a sensor bracket 12. For example, FIG. 14 shows an implementable structure of the sensor bracket 12, and FIG. 8 and FIG. 9 each show another implementable structure of the sensor bracket 12. A structure of the sensor bracket 12 and a structure connecting the sensor bracket 12 to the compartment housing 1 are not specially limited in this application.

When the optical sensor 4 operates, for having good detection performance, for example, eliminating distortion, eliminating ghosting, and improving light transmittance, glass with an excellent optical property may be selected as the compartment window 2, and a good operating environment needs to be provided for the optical sensor 4. Further, in addition to the optical sensor 4, the sensor compartment 06 provided in this application further includes an environment assistance system. The environment assistance system may provide a better operating environment for the optical sensor 4. For example, the environment assistance system may clean the compartment window 2 to improve light transmittance. For another example, when an external environment temperature is low and the compartment window 2 is frosted, the environment assistance system may heat the compartment window 2. For still another example, when a temperature in the compartment housing 1 is low, the environment assistance system may perform heating in the compartment housing 1. For yet another example, when humidity in the compartment housing 1 is high, the environment assistance system may perform dehumidification.

In conclusion, the environment assistance system is configured to implement at least one of cleaning of the compartment window, heating of the compartment window, dehumidification in the compartment housing, and heat dissipation in the compartment housing, to provide a better operating environment for the optical sensor 4, and further improve detection performance of the optical sensor 4.

The following provides, with reference to the accompanying drawings, several examples of structures that can be implemented by the environment assistance system. For details, refer to the following descriptions. It should be noted that the implementable structures described below are merely examples for description. During specific implementation, refer to these structures, but these structures are not limited.

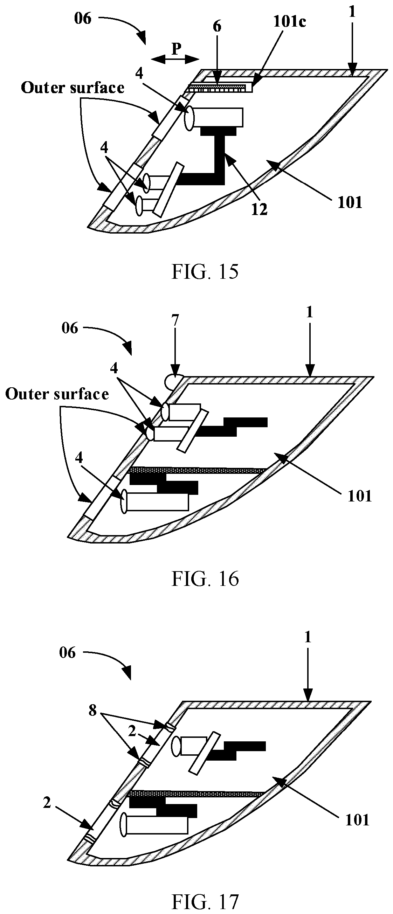

FIG. 15 is a diagram of a structure of a sensor compartment 06 including a compartment window cleaning apparatus. In FIG. 15, the compartment window cleaning apparatus includes a wiper 6 that can clean an outer surface (a surface facing the outside of the driver's cab) of the compartment window 2, and an independent third receptacle 101c that can accommodate the wiper 6 is formed in the receptacle 101 of the compartment housing 1. When the wiper 6 does not perform a cleaning operation, the wiper 6 is hidden in the third receptacle 101c. When the compartment window 2 needs to be cleaned, the wiper 6 may extend, driven by a drive structure, to the outer surface of the compartment window 2. That is, driven by the drive structure, the wiper 6 may move from a first position (located in the third receptacle 101c) to a second position (located outside the compartment window 2).

In some possible implementations, the drive structure that drives the wiper 6 to move from the third receptacle 101c to the outer surface of the compartment window 2 may include: a telescopic unit that drives the wiper 6 to move in a P direction in FIG. 15; and a swing sweeper unit that drives the wiper 6 to swing on the outer surface of the compartment window 2. In this way, when the wiper 6 specifically operates, the wiper 6 is first driven by the telescopic unit to move in a straight line from the inside of third receptacle 101c to the outside of the third receptacle 101c in the P direction, and is driven by the swing sweeper unit to rotate on the outer surface of the compartment window 2, to clean the outer surface of the compartment window 2.

The telescopic unit may be a telescopic rod driven by a motor, a telescopic rod driven by hydraulic pressure, or a telescopic structure of another structural type.

The swing sweeper unit may include a rotating motor, and an output shaft of the rotating motor may drive the wiper 6 to rotate on the outer surface of the compartment window 2. Certainly, another structure that drives the wiper 6 to rotate may alternatively be used.

Still refer to FIG. 15, because the third receptacle 101c for accommodating the wiper 6 and the chamber for accommodating the optical sensor 4 are separated, when the wiper 6 located in the third receptacle 101c carries water, the water does not enter space in which the optical sensor 4 is located and does not affect performance of the optical sensor 4.

FIG. 16 is a diagram of a structure of another sensor compartment 06 including a compartment window cleaning apparatus. In FIG. 16, the compartment window cleaning apparatus includes a nozzle 7 that can clean the outer surface of the compartment window 2, and the nozzle 7 may be installed at a position that is on the compartment housing 1 and that is close to the vehicle top of the driver's cab. A cleaning liquid sprayed by the nozzle 7 may be sprayed on the outer surface of the compartment window 2, or sprayed on the entire surface that is of the compartment housing 1 and the compartment window 2 and that faces the outside of the driver's cab.

The cleaning liquid used for the nozzle 7 in FIG. 16 can be shared with a cleaning liquid of the existing wiper, that is, an output pipe of the cleaning liquid of the existing wiper can communicate with the nozzle 7. How the nozzle 7 communicates with the output pipe of the cleaning liquid of the wiper is not specially limited in this application.

In some implementable structures, the wiper 6 shown in FIG. 15 may be combined and assembled with the nozzle 7 shown in FIG. 16 to clean the outer surface of the compartment window.

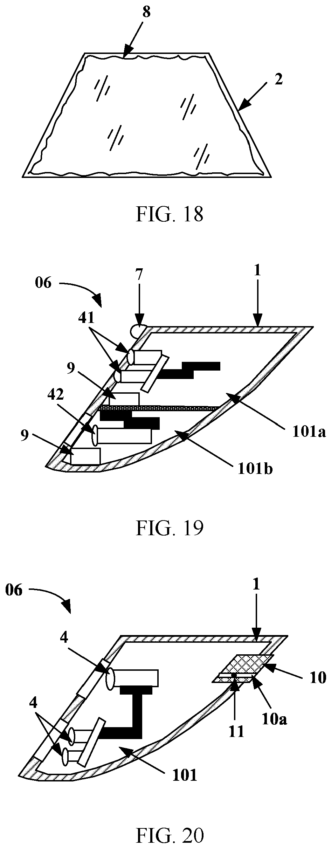

FIG. 17 is a diagram of a structure of a sensor compartment 06 including a compartment window heating apparatus. In FIG. 17, the compartment window heating apparatus includes a heating wire 8 that can heat the compartment window 2. FIG. 18 is a simple diagram of a structure of the compartment window 2 including the heating wire 8. Refer to FIG. 17 and FIG. 18. The heating wire 8 may be arranged along an edge of the compartment window 2. In this way, frost, fog, and the like deposited on the surface of the compartment window 2 may be heated by using heat dissipated by the heating wire 8, so that the frost melts and evaporates. This ensures light transmittance of the compartment window 2.

In addition, the heating wire 8 in this application is disposed along the edge of the compartment window 2, that is, at a position that is on the compartment window 2 and that is close to the compartment housing 1. In this way, the field of view of the optical sensor 4 is not interfered.

In an optional structure, the heating wire 8 may be implemented by an electric heating wire. The electric heating wire is a conductive metal wire with high impedance. After being energized, the electric heating wire generates heat, and the heat is transferred to the entire compartment window 2 through heat conduction, so that the compartment window 2 is warmed up, and ice or fog on the compartment window 2 is eliminated.

FIG. 19 is a diagram of a structure of another sensor compartment 06 including a compartment window heating apparatus. In FIG. 19, the compartment window heating apparatus includes a heat gun 9 that can heat the compartment window 2, and the heat gun 9 is disposed in the receptacle in the compartment housing 1. For example, as shown in FIG. 19, the receptacle in the compartment housing 1 is divided into a first receptacle 101a and a second receptacle 101b that are independent of each other, and the heat gun 9 may be disposed in each of the first receptacle 101a and the second receptacle 101b.

When the heating apparatus shown in FIG. 19 operates, the heat gun 9 generates hot air. The hot air flows to the compartment window 2 with the flowing airflow. At the compartment window 2, frost on the outer surface of the compartment window 2 is removed in a heat convection manner, to create a better operating environment for the optical sensor 4.

FIG. 20 is a diagram of a structure of a sensor compartment 06 including a compartment housing dehumidification apparatus. The compartment housing dehumidification apparatus shown in FIG. 20 includes a first fan 10, one end (an air inlet) of an air duct 10a of the first fan 10 communicates with the chamber accommodating the optical sensor 4 in the compartment housing 1, and the other end (an air outlet) of the air duct 10a of the first fan 10 communicates with the outside of the compartment housing 1. In addition, the compartment housing dehumidification apparatus further includes an absorption structure 11, and the water-absorbing structure 11 is disposed in the air duct 10a.

When the compartment housing dehumidification apparatus shown in FIG. 20 operates, the first fan 10 can discharge air in the compartment housing 1 to the outside of the compartment housing 1, and when the air passes through the air duct 10a, moisture stored in the water-absorbing structure 11 can evaporate with the wind to the outside of the compartment housing 1, to perform dehumidification on the compartment housing.

The absorption structure 11 may be an absorption layer structure made of a water-absorbing material. For example, the water-absorbing material may be selected from starch-grafted acrylates, grafted acrylamide, high-substituted cross-linked carboxymethyl cellulose, and the like. For example, sponge may alternatively be selected.

The absorption layer structure formed by the water-absorbing material may include a plurality of layers, and the multi-layer absorption layer structure may be arranged in an extension direction of the air duct 10a to improve dehumidification effect.

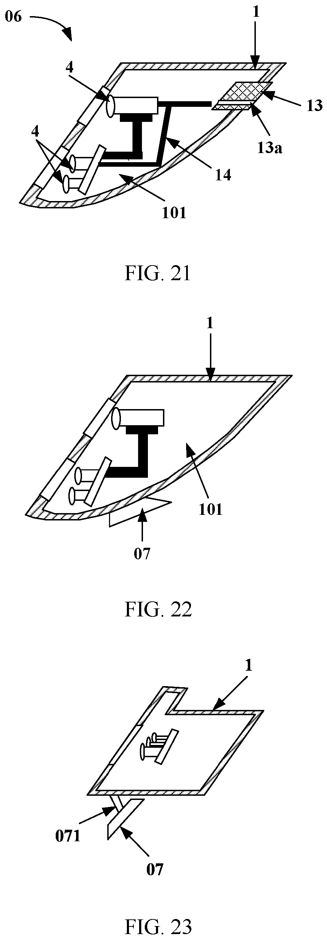

FIG. 22 is a diagram of a structure of a sensor compartment 06 including a compartment housing heat dissipation apparatus. The compartment housing heat dissipation apparatus shown in FIG. 21 includes a second fan 13, one end (an air inlet) of an air duct 13a of the second fan 13 communicates with the chamber accommodating the optical sensor 4 in the compartment housing 1, and the other end (an air outlet) of the air duct 13a of the first fan 13 communicates with the outside of the compartment housing 1. In addition, the compartment housing heat dissipation apparatus further includes a heat conduction structure 14, one part of the heat conduction structure 14 is close to the optical sensor 4, and another part of the heat conduction structure 14 is close to the air duct 13a of the second fan 13.

Because the heat conduction structure 14 is located between the optical sensor 4 and the air duct 13a of the second fan 13, heat diffused by the optical sensor 4 may be conducted to the air duct 13a by using the heat conduction structure 14. In this way, after the second fan 13 starts, the heat is transferred to the outside of the compartment housing 1, to achieve heat dissipation and cooling of the optical sensor 4.

In this embodiment, the heat conduction structure 14 may be a metal member having high heat conductivity, a heat pipe, or the like.

Both the compartment housing dehumidification apparatus and the compartment housing heat dissipation apparatus include a fan. To simplify a structure of the entire sensor compartment, the first fan 10 in the compartment housing dehumidification apparatus and the second fan 13 in the compartment housing heat dissipation apparatus may share one fan.

Refer to FIG. 20 and FIG. 21. A fan is disposed on a part that is of the compartment housing 1 that is located in the driver's cab, and an air duct of the fan may extend to the outside of the compartment housing 1. For aesthetics, a metal mesh cover may be installed at a position at which the fan is disposed in the compartment housing 1. In this way, overall appearance aesthetics of the module is ensured, and the metal mesh cover can also be used for heat dissipation.

The driving device 100 further includes a rear view mirror disposed in the driver's cab. In this application, the rear view mirror may be disposed in a plurality of different manners. The following provides several different disposing manners.

FIG. 22 shows a disposing manner of the rear view mirror 07 provided in this application. Specifically, the rear view mirror 07 may be fastened to a part that is of the compartment housing 1 and that is located in the driver's cab. For example, the rear view mirror 07 may be fastened to the surface of the compartment housing 1 by using an adhesive layer.

FIG. 23 is another disposing manner of the rear view mirror 07 provided in this application. To be specific, the rear view mirror 07 may be fastened to the part that is of the compartment housing 1 and that is located in the driver's cab by using a bracket 071.

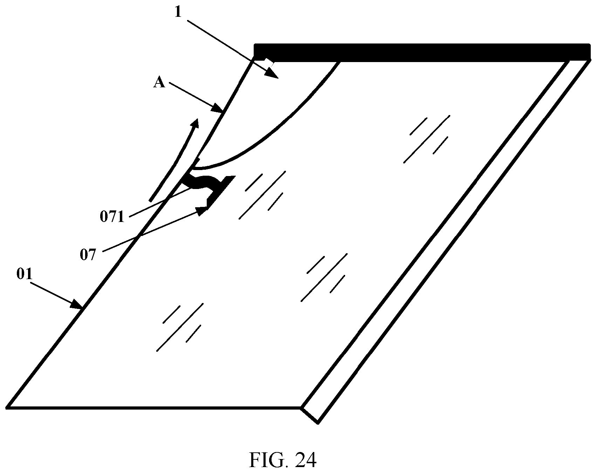

FIG. 24 is still another disposing manner of the rear view mirror 07 provided in this application. To be specific, the rear view mirror 07 may be fastened to the front windshield 01 by using the bracket 071, and is disposed close to the sensor compartment 06.

In addition, in some implementable structures, a concave chamber may be formed on a surface of a part that is of the compartment housing 1 and that is located in the driver's cab, and the rear view mirror 07 is embedded in the concave chamber.

To expand accommodation space in the compartment housing 1, as shown in FIG. 24, a surface that is of the compartment housing 1 and that faces the outside of the driver's cab may be designed as a curved surface protruding toward the outside of the driver's cab, for example, a curved surface A shown in FIG. 24. Because the compartment housing 1 is used as a support structure instead of a field of view window of the optical sensor 4, and there is no much limitation on a shape of the compartment housing 1, as shown in FIG. 24, the surface that is of the compartment housing 1 and that faces the outside of the driver's cab may be designed as a curved surface, to expand space in the compartment housing 1.

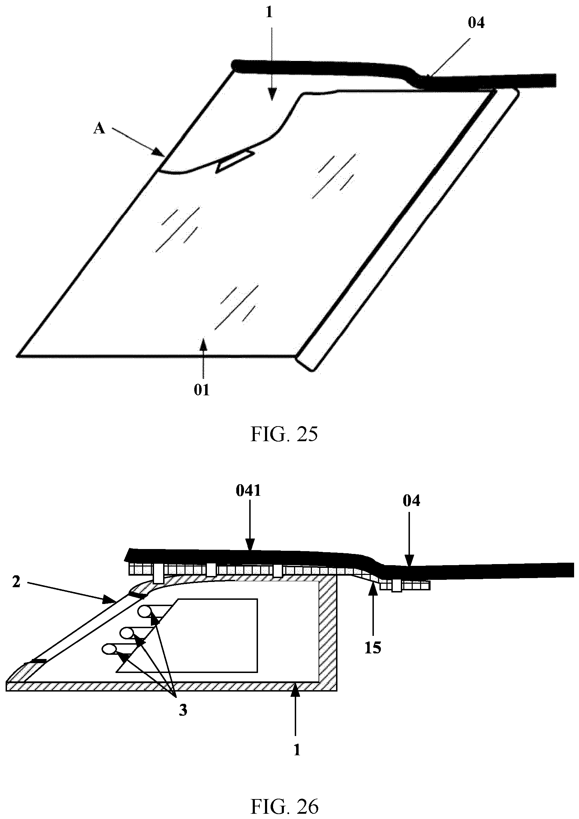

FIG. 25 is a diagram of another structure that can expand accommodation space in the compartment housing 1. Specifically, a surface that is of the compartment housing 1 and that faces the top of the driver's cab 04 may protrude in a direction toward the top of the driver's cab, to expand the space in the compartment housing 1.

For a manner of fastening the sensor compartment 06 in this application, in addition to the foregoing mentioned manner that the compartment housing 1 of the sensor compartment 06 is embedded in the embedding groove 011 of the front windshield 01, to improve connection stability of the sensor compartment 06, as shown in FIG. 26, the compartment housing 1 of the sensor compartment 06 may be further fastened to the top 041 of the driver's cab 04. In this way, connection reliability and stability of the sensor compartment 06 can be further improved.

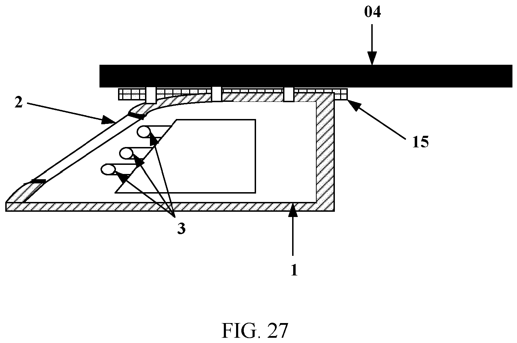

FIG. 26 and FIG. 27 each show a manner of fastening the compartment housing 1 of the sensor compartment 06 to the driver's cab 04. Refer to FIG. 26 and FIG. 27. The compartment housing 1 is fastened to the driver's cab 04 by using an installation bracket 15. Specifically, a side surface that is of the compartment housing 1 and that faces the top of the driver's cab 04 is fastened to the top 041 of the driver's cab 04 by using the installation bracket 15.

In some implementations, the installation bracket 15 may be fastened to the top 041 of the driver's cab 04 by using an adhesive layer, and then the compartment housing 1 is fastened to the installation bracket 15 by using the adhesive layer, to fasten the compartment housing 1 to the driver's cab 04. In some other implementations, the installation bracket 15 may be fastened to the compartment housing 1 and the driver's cab 04 by using a connection member (for example, a bolt or a rivet).

In an implementable structure, the installation bracket 15 in this application and the compartment housing 1 may be two independent mechanical members. In another implementation, the installation bracket 15 may be a mechanical member integrated with the compartment housing 1. Such a design can simplify an assembly process of the sensor compartment 06 and the driver's cab 04.

In the manners of fastening the compartment housing 1 shown in FIG. 26 and FIG. 27, a difference lies in that in FIG. 26, the part that is of the top 041 of the driver's cab 04 and that is for fastening the compartment housing 1 may protrude toward the outside of the driver's cab, to form a protrusion part shown in FIG. 26. In this way, larger placement space may be reserved for the sensor compartment 06, to expand space in the compartment housing 1. Further, more sensors or another component may be disposed in the compartment housing 1. In FIG. 27, the part that is of the top 041 of the driver's cab 04 and that is for fastening the compartment housing 1 does not protrude toward the outside of the driver's cab, but is located on a same plane as the other part.

The foregoing explains a structure of the sensor compartment 06 and an installation manner of the optical sensor 4 in the sensor compartment 06. In this case, in a specific assembly process, the sensor compartment 06 may be assembled based on the following method.

First, structures such as the optical sensor 4, the compartment window cleaning apparatus, the compartment window heating apparatus, the compartment housing dehumidification apparatus, and the compartment housing heat dissipation apparatus may be installed in the compartment housing 1 of the sensor compartment 06.

Second, the embedding groove that is of the windshield and that is configured to install the sensor compartment 06 may be cleaned, to remove a foreign matter at a position that is on the embedding groove and that is in contact with the sensor compartment.

Third, the sensor compartment 06 is installed in the embedding groove, and the position that is on the compartment housing 1 and that is in contact with the windshield is sealed.

Based on the foregoing descriptions of the assembly method, it can be learned that in this application, the compartment housing 1 and the windshield are sealed and assembled, and the field of view glass compartment window of the optical sensor is not assembled with the windshield. In this case, assembly process difficulty is not increased. For a specific reason, refer to the foregoing descriptions, and details are not described herein again.

In the descriptions of this specification, the specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensor compartment, wherein the sensor compartment is configured to be embedded in a windshield, and the sensor compartment comprises:
a compartment housing, wherein the compartment housing is sealed, the compartment housing has at least one window, and the window is a light-transmitting compartment window; and
the compartment housing is configured to place at least one optical sensor, and light outside the compartment housing is capable of being received by the optical sensor through the compartment window.

2. The sensor compartment according to claim 1, wherein a viewing window of the optical sensor faces the compartment window.

3. The sensor compartment according to claim 1 or 2, wherein the viewing window of the optical sensor is embedded in the compartment window.

4. The sensor compartment according to any one of claims 1 to 3, wherein the at least one optical sensor comprises a first optical sensor and a second optical sensor;
the first optical sensor comprises a visible light camera and/or an infrared camera; and
the second optical sensor comprises a lidar.

5. The sensor compartment according to claim 4, wherein an isolation plate is disposed in the compartment housing, and the isolation plate divides space in the compartment housing into a first chamber and a second chamber; and
the first optical sensor is disposed in the first chamber, and the second optical sensor is disposed in the second chamber.

6. The sensor compartment according to any one of claims 1 to 5, wherein the sensor compartment further comprises:
at least one of a compartment window cleaning apparatus, a compartment window heating apparatus, a compartment housing dehumidification apparatus, and a compartment housing heat dissipation apparatus.

7. The sensor compartment according to claim 6, wherein the compartment window heating apparatus comprises:
a heating wire, wherein the heating wire is arranged along an edge of the compartment window.

8. The sensor compartment according to claim 6 or 7, wherein the compartment window cleaning apparatus comprises:
a wiper; and
a drive structure, connected to the wiper, wherein the drive structure is capable of driving the wiper to move between a first position and a second position, when the wiper is in the first position, the wiper is located in the compartment housing, and when the wiper is in the second position, the wiper is located outside the compartment window.

9. The sensor compartment according to any one of claims 6 to 8, wherein the compartment housing dehumidification apparatus comprises:
a first fan, wherein one end of an air duct of the first fan communicates with the inside of the compartment housing, and the other end of the air duct of the first fan communicates with the outside of the compartment housing; and
a water-absorbing structure, wherein the water-absorbing structure is disposed in the air duct of the first fan.

10. The sensor compartment according to any one of claims 6 to 9, wherein the compartment housing heat dissipation apparatus comprises:
a second fan, wherein one end of an air duct of the second fan communicates with the inside of the compartment housing, and the other end of the air duct of the second fan communicates with the outside of the compartment housing; and
a heat conduction structure, wherein one part of the heat conduction structure is close to the optical sensor, and another part of the heat conduction structure is close to the air duct of the second fan.

11. The sensor compartment according to any one of claims 1 to 10, wherein the compartment housing is made of an opaque material.

12. A driving device, comprising:
a windshield;
the sensor compartment according to any one of claims 1 to 11, wherein the compartment housing of the sensor compartment is embedded in the windshield; and
at least one optical sensor, wherein the at least one optical sensor is placed in the compartment housing.

13. The driving device according to claim 12, wherein an embedding groove is provided at a position that is on the windshield and that is close to the top of a driver's cab, and the compartment housing is installed in the embedding groove and is connected to the windshield in a sealed manner.

14. The driving device according to claim 12 or 13, wherein the driving device further comprises a rear view mirror disposed in the driver's cab, and the rear view mirror is installed on a part that is of the compartment housing and that is located in the driver's cab.

15. A sensor compartment installation method, wherein a sensor compartment comprises a compartment housing, the compartment housing is sealed, at least one window is provided on the compartment housing, the window is a light-transmitting compartment window, the compartment housing is configured to place at least one optical sensor, and light outside the compartment housing is capable of being received by the optical sensor through the compartment window; and
the installation method comprises:
installing the compartment housing of the sensor compartment in an embedding groove on a windshield; and
connecting the compartment housing to the windshield in a sealed manner.

16. The sensor compartment installation method according to claim 15, wherein before the installing the compartment housing of the sensor compartment in an embedding groove on a windshield, the installation method further comprises:
cleaning a position that is on the embedding groove and that is in contact with the compartment housing.
